(19) Europäisches Patentamt
European Patent Office
Office européen des brevets

(11) **EP 4 230 281 A1**

(12) **EUROPEAN PATENT APPLICATION**
published in accordance with Art. 153(4) EPC

(43) Date of publication:
**23.08.2023 Bulletin 2023/34**

(21) Application number: **21882759.0**

(22) Date of filing: **18.10.2021**

(51) International Patent Classification (IPC):
**B01D 53/04** $^{(2006.01)}$     **F16L 55/24** $^{(2006.01)}$

(52) Cooperative Patent Classification (CPC):
**B01D 53/04; F16L 55/24**

(86) International application number:
**PCT/JP2021/038386**

(87) International publication number:
**WO 2022/085618 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.10.2020 JP 2020175100**

(71) Applicant: **Nitta Corporation
Osaka-shi, Osaka 556-0022 (JP)**

(72) Inventors:
• **TAKAYOSHI, Hisakazu
Tokyo 104-0061 (JP)**
• **HITOTSUBASHI, Mizuho
Tokyo 104-0061 (JP)**
• **KONDO, Masaya
Osaka-shi, Osaka 556-0022 (JP)**
• **MIYAMOTO, Hiroshi
Yamatokooriyama-shi, Nara 639-1085 (JP)**

(74) Representative: **Hasegawa, Kan
Patentanwaltskanzlei Hasegawa
Untere Hauptstraße 56
85354 Freising (DE)**

(54) **FILTER UNIT**

(57)    A filter unit includes: a tube; a chemical filter; a first joint; and a second joint. The tube includes a first end portion and a second end portion, and is flexible. The chemical filter is housed inside the tube. The first joint is connected to the first end portion of the tube. The second joint is connected to the second end portion of the tube. The first joint is configured to be directly or indirectly connected to a device that discharges compressed air.

FIG.1

EP 4 230 281 A1

**Description**

Technical Field

The present invention relates to a filter unit.

Background Art

JP 2006-263545A (Patent Literature 1) discloses a reactor for removing hydrogen chloride gas. In this reactor, a hydrogen-chloride-gas absorber is housed inside a cylindrical main body. A gas to be processed is supplied to the inside of the cylindrical main body from one end portion of the cylindrical main body, and the processed gas is discharged to the outside from the other end portion of the cylindrical main body (see Patent Literature 1).

Citation List

Patent Literature

Patent Literature 1: JP 2006-263545A

Summary of Invention

Technical Problem

In order to use a filter unit that is configured to remove a specific gas, a space for installing the filter unit needs to be secured. Furthermore, an access route for installing and removing the filter unit (a space through which the filter unit can be taken in and out of a device or the like to which the filter unit is to be attached) needs to be secured. However, it is not necessarily the case that a sufficiently large installation space and the like (installation space and access route) for a filter unit can be secured, and there is often a limitation on the installation space and the like. Above-described Patent Literature 1 does not disclose any means for solving such a problem.

The present invention has been made in order to solve such a problem, and an object thereof is to provide a filter unit that can be installed relatively easily even if there is a limitation on installation space and the like.

Solution to Problem

A filter unit according to one aspect of the present invention includes: a tube; a chemical filter; a first joint; and a second joint. The tube includes a first end portion and a second end portion, and is flexible. The chemical filter is housed inside the tube. The first joint is connected to the first end portion of the tube. The second joint is connected to the second end portion of the tube. The first joint is configured to be directly or indirectly connected to a device that discharges compressed air.

In this filter unit, the tube is flexible, and joints are connected to the two end portions of the tube. Thus, according to this filter unit, the filter unit can be installed relatively easily even if there is a limitation on installation space and the like because the tube can be easily deformed and also because the tube and a device or the like that discharges compressed air can be connected easily.

In the above-described filter unit, the first and second joints may be quick joints.

Thus, according to this filter unit, the tube and the device or the like that discharges compressed air can be easily connected to each other.

In the above-described filter unit, the first and second end portions may may be respectively provided with openings, the filter unit may further include caps that are respectively attached to the openings, the cap may include: a tubular portion having a front end portion thereof inserted into the opening; a flange portion that is formed on a rear end portion of the tubular portion and that is in contact with a rim of the opening; and a mesh portion that is attached to the flange portion and that covers the opening, and the mesh portion may include mesh and an air filter medium.

In this filter unit, caps including a mesh portion are respectively connected to the openings of the tube. Thus, according to this filter unit, the chemical filter can be kept inside the tube without blocking the path of the compressed air.

In the above-described filter unit, the tubular portion may be provided with a tapered portion that expands radially outward of the tubular portion commensurately as a distance to the rear end portion decreases.

Because individual differences may occur between tubes, depending on the inner diameter of the tube, there may be cases in which the cap cannot be connected to the tube properly if the tubular portion is completely straight. Because the cap in this filter unit is provided with a tapered portion, the tapered portion comes into contact with the inner circumferential surface of the tube even if there is a slight difference in the inner diameter of the tube due to an individual difference. Thus, according to this filter unit, the cap can be connected to the tube properly even if there is an individual difference in the tube.

In the above-described filter unit, a length from the front end portion to the rear end portion may be shorter than a length to the rear end portion from a seal portion that establishes sealing between the first joint and the tube.

If the front end portion of the cap reaches a seal portion that establishes sealing between a joint and the tube, the sealing performance between the joint and the tube may be affected depending on the material and diameter of the cap. In this filter unit, the length from the front end portion to the rear end portion is shorter than the length to the rear end portion from the seal portion establishing sealing between the first joint and the tube. Thus, according to this filter unit, because the front end portion of the cap does not reach the seal portion establishing sealing between a joint and the tube, the sealing performance between the joint and the tube can be can be kept at a sufficient level.

In the above-described filter unit, in a length direction of the tube, a length of the flange portion may be shorter than a length of a portion of the tubular portion where the tapered portion is formed.

An increase in the length of the flange portion in the length direction of the tube results in weaker connection strength and sealing performance between the joints and the tube. In this filter unit, in the length direction of the tube, the length of the flange portion is shorter than the length of the portion of the tubular portion where the tapered portion is formed. Thus, according to this filter unit, the connection strength and sealing performance between the joints and the tube can be kept at a sufficient level.

In the above-described filter unit, the tube may be a pressure-resistant tube.

The present inventor(s) found that, compared to cases in which contamination gases are removed under atmospheric pressure, contamination gases can be more efficiently removed by discharging pressurized atmospheric air or additionally pressurized compressed air to the filter unit 10. According to this filter unit, contamination gases included in pressurized atmospheric air or pressurized compressed air can be removed because the tube is a pressure-resistant tube. Thus, contamination gases can be efficiently removed.

In the above-described filter unit, the first and second end portions may be respectively provided with openings, the filter unit may further include caps that are respectively attached to the openings, the cap may include: a tubular portion having a front end portion thereof inserted into the opening; and a flange portion that is formed on a rear end portion of the tubular portion and that is in contact with a rim of the opening, and the tubular portion may have a constant outer diameter between the front end portion and the rear end portion.

According to this filter unit, the cap can be easily manufactured.

In the above-described filter unit, the cap includes a mesh portion that is formed integrally with at least one of the tubular portion and the flange portion so as to cover the opening.

According to this filter unit, the mesh portion is unlikely to come loose.

A filter unit according to another aspect of the present invention includes: a plurality of tubes; a chemical filter; a first joint; and a second joint. Each of the plurality of tubes includes a first end portion and a second end portion, and is flexible. The chemical filter is housed inside each of the plurality of tubes. The first joint integrates the first end portions of the plurality of tubes. The second joint integrates the second end portions of the plurality of tubes. The first joint is configured to be directly or indirectly connected to a device that discharges compressed air.

In this filter unit, the chemical filter is distributed between a plurality of tubes. Thus, if the amount of the chemical filter is the same, the tubes can be made narrower compared to when there is only one tube. Consequently, according to this filter unit, the filter unit can be made more readily bendable and thinner.

Advantageous Effects of Invention

According to the present invention, a filter unit that can be installed relatively easily even if there is a limitation on installation space and the like can be provided.

Brief Description of Drawings

FIG. 1 is a diagram illustrating a schematic configuration of a filter unit according to embodiment 1.
FIG. 2 is a diagram schematically illustrating a portion excluding joints in a cross-section taken along line II-II in FIG. 1.
FIG. 3 is a perspective view of a cap.
FIG. 4 is a diagram illustrating the cap from a front end side thereof.
FIG. 5 is a lateral view of the cap.
FIG. 6 is a diagram schematically illustrating the vicinity of a joint in the cross-section taken along line II-II in FIG. 1.
FIG. 7 is a flowchart illustrating a procedure for manufacturing the filter unit.

FIG. 8 is a diagram schematically illustrating a second end portion of a tube and the vicinity thereof in a filter unit according to embodiment 2.

FIG. 9 is a lateral view of a cap illustrated in FIG. 8.

FIG. 10 is a front view of the cap illustrated in FIG. 8.

FIG. 11 is a table showing results of a first test.

FIG. 12 is a graph showing the results of the first test.

FIG. 13 is a table showing results of a second test.

FIG. 14 is a graph showing the results of the second test.

FIG. 15 is a diagram illustrating a schematic configuration of a filter unit in a modification.

FIG. 16 is a diagram illustrating a partial cross-sectional structure of a first joint illustrated in FIG. 15.

Description of Embodiments

Embodiments of the present invention will be described in detail below with reference to the drawings. Note that the same reference symbol is given to portions in the drawings that are the same as or equivalent to one another, and description thereof will not be repeated.

<Embodiment 1>

[1. Schematic Configuration of Filter Unit]

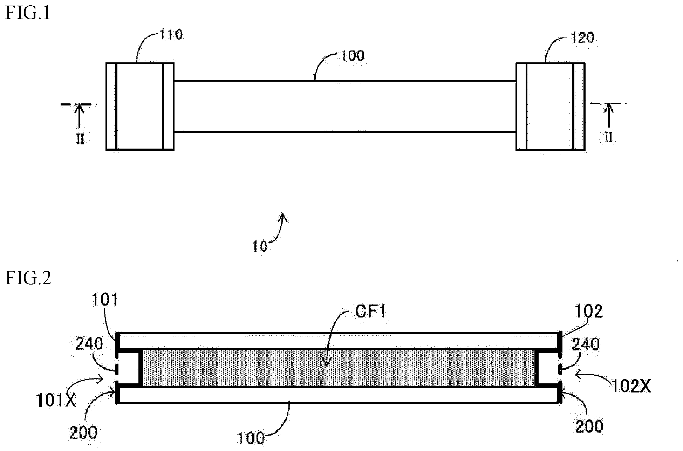

FIG. 1 is a diagram illustrating a schematic configuration of a filter unit 10 according to the present embodiment. For example, the filter unit 10 is configured to be connected to a device outside the filter unit 10 and to remove a contamination gas included in compressed air discharged by the device. For example, examples of the contamination gas include: hydrogen sulfide; SOx; NOx; hydrogen chloride; hydrogen fluoride; acetic acid; formic acid; nitric acid; sulfuric acid; ammonia; amine-based substances; chlorine; ozone; hydrogen peroxide; and organic substances such as hydrocarbons, fatty acids, silanol, and siloxane.

As illustrated in FIG. 1, the filter unit 10 includes a tube 100, a first joint 110, and a second joint 120. The tube 100 is a flexible tubular member. For example, the tube 100 is made of urethane, fluorine, polyolefin, nylon, or formed by a laminate of such materials. That is, the tube 100 is constituted from a thermoplastic resin, for example. The tube 100 can be easily bent because the tube 100 is formed by a flexible member.

The thermoplastic resin constituting the tube 100 is preferably a pressure-resistant material. In other words, the tube 100 is preferably a pressure-resistant tube. The present inventor(s) found that, compared to a case in which contamination gases are removed under atmospheric pressure, contamination gases can be more efficiently removed and the service life of the tube 100 is increased by discharging pressurized atmospheric air or additionally pressurized compressed air to the filter unit 10. For example, the maximum pressure of the pressurized compressed air is 0.7 MPa. For example, the pressure-resistant thermoplastic resin is a special thermoplastic elastomer, urethane, fluorine, polyolefin, or nylon.

The first joint 110 and the second joint 120 are respectively connected to one end portion and the other end portion in the length direction of the tube 100. In the following, the one end portion and the other end portion in the length direction of the tube 100 are respectively referred to as a first end portion 101 (see FIG. 2) and a second end portion 102 (see FIG. 2). A pipe such as the tube 100 can be connected from two directions to each of the first and second joints 110 and 120. The first and second joints 110 and 120 are so-called quick joints. Thus, a pipe such as the tube 100 can be easily connected from two directions to each of the first and second joints 110 and 120.

For example, a device that discharges compressed air (pressurized air) is directly or indirectly connected to one of the first and second joints 110 and 120. For example, examples of the device include: an air compressor; an $N_2$ gas generator; a gas cylinder; and a pump such as a vacuum pump or a compression pump. Note that, in a case in which the device and one of the first and second joints 110 and 120 are indirectly connected, the device and the one of the first and second joints 110 and 120 are connected via a tube, for example.

Furthermore, a pipe such as a tube is connected to the other one of the first and second joints 110 and 120, for example, and the compressed air discharged by the pipe is supplied to a target object. Examples of the target object include: a vacuum dryer in a pharmaceutical factory; an exhibition case installed in an art museum; a household fuel cell; or a computer, a control board, a power board, a power distribution board, or a control panel installed in a data center. Examples of the target object also include a computer, a control board, a power board, a power distribution board, or a control panel installed in a chemical plant, a paper mill, a water and wastewater treatment plant, a geothermal power plant, a thermal power plant, a spa, or the like.

FIG. 2 is a diagram schematically illustrating a portion excluding the first and second joints 110 and 120 in a cross-section taken along line II-II in FIG. 1. As illustrated in FIG. 2, the filter unit 10 (see FIG. 1) further includes a chemical filter CF1 and a plurality of (two) caps 200.

The chemical filter CF1 is made of a material that can remove the contamination gas included in the compressed air. Examples of the chemical filter CF1 include: activated charcoal; an ion exchange resin; activated alumina impregnated with an oxidant; zeolite; silica gel; mesoporous silica; a molecular sieve; a metal catalyst; sintered metal; and a photocatalyst. The tube 100 is filled with the chemical filter CF1. Thus, the contamination gas included in the compressed air passing through the tube 100 is removed. A cap 200 including a mesh portion 240 is attached to each of the two end portions in the length direction of the tube 100. For example, the mesh portion 240 may include mesh and an air filter medium, or may only include mesh. The mesh portion 240 has a mesh size that does not allow the element forming the chemical filter CF1 (e.g., activated charcoal or the like) to flow outside of the cap 200.

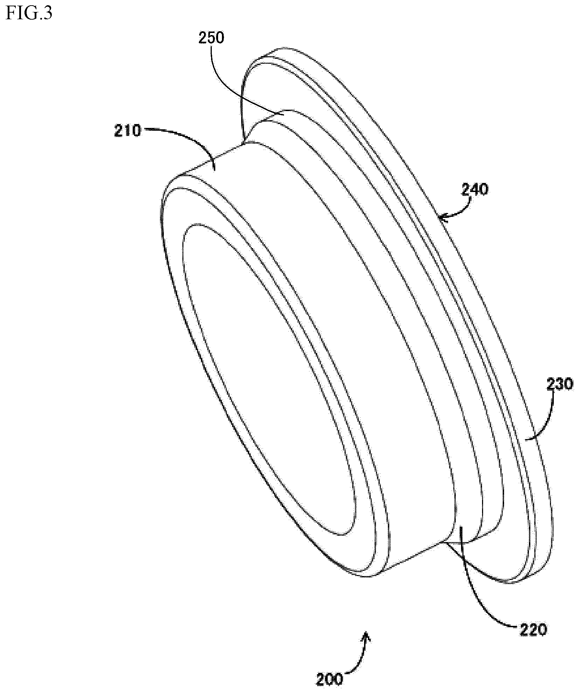

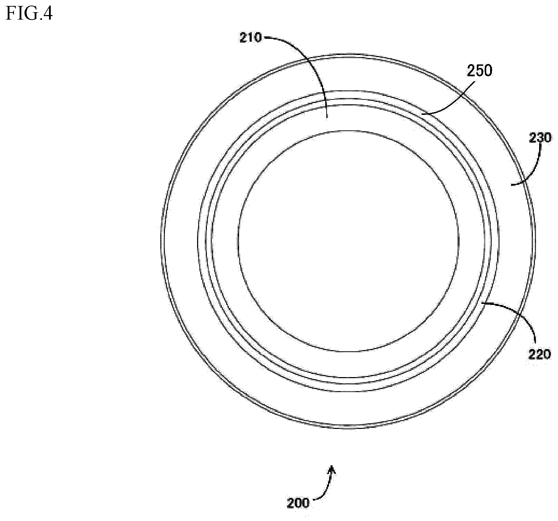

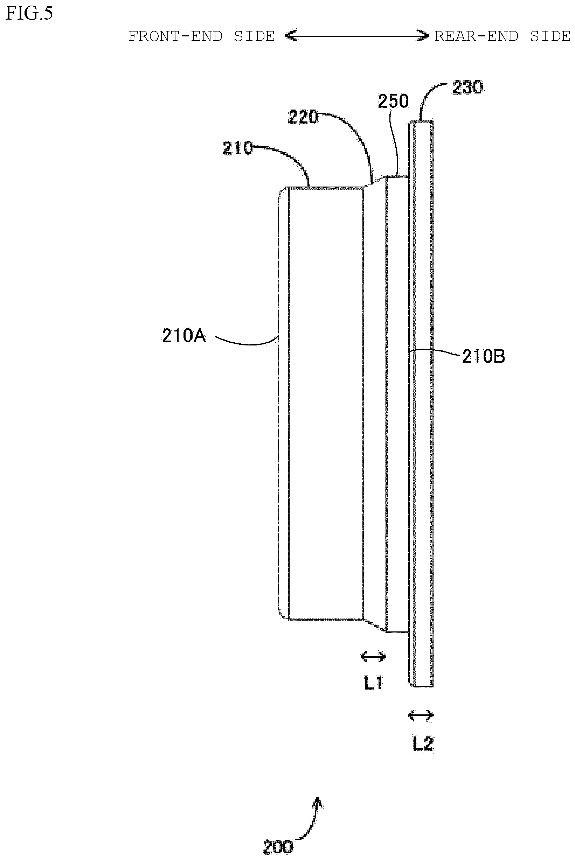

FIG. 3 is a perspective view of the cap 200. FIG. 4 is a diagram illustrating the cap 200 from a front end side thereof. Note that the mesh portion 240 is omitted from FIG. 4. FIG. 5 is a lateral view of the cap 200.

With reference to FIGS. 3, 4, and 5, the cap 200 includes a tubular portion 210, a flange portion 230, and the mesh portion 240. The tubular portion 210 has a circular shape in a plan view. A front end portion 210A (see FIG. 5) of the tubular portion 210 is inserted into openings 101X and 102X (see FIG. 2) respectively provided in the first and second end portions 101 and 102 in the length direction of the tube 100. The flange portion 230 is formed on a rear end portion 210B of the tubular portion 210, and extends radially outward of the tubular portion 210. In a state in which the cap 200 is attached to the tube 100, a front-end-side surface of the flange portion 230 is in contact with rims of the openings 101X and 102X. For example, the tubular portion 210 and the flange portion 230 are integrally formed using a resin.

The tubular portion 210 is provided with a tapered portion 220 and a straight portion 250. The tapered portion 220 expands radially outward of the tubular portion 210 commensurately as a distance to the rear end portion 210B of the tubular portion 210 decreases. The straight portion 250 is formed between the tapered portion 220 and the flange portion 230. The straight portion 250 has a constant outer diameter between the tapered portion 220 and the rear end portion 210B of the tubular portion 210. The reason as to why the tubular portion 210 is provided with the tapered portion 220 will be explained next.

Because individual differences may occur between tubes 100, depending on the inner diameter of the tube 100, there may be cases in which the cap 200 cannot be connected to the tube 100 properly if the tubular portion 210 is completely straight. For example, the cap 200 cannot be connected to the tube 100 properly if the inner diameter of the tube 100 is greater than the outer diameter of the tubular portion 210. Because the tubular portion 210 in the filter unit 10 is provided with the tapered portion 220, the tapered portion 220 comes into contact with the inner circumferential surface of the tube 100 even if there is a slight difference in the inner diameter of the tube 100 due to an individual difference. Thus, according to the filter unit 10, the cap 200 can be connected to the tube 100 properly even if there is an individual difference in the tube 100.

Furthermore, in the cap 200, in the length direction of the tube 100, a length L2 of the flange portion 230 is shorter than a length L1 of the portion of the tubular portion 210 where the tapered portion 220 is formed. The reason why such a configuration is adopted will be explained next.

An increase in the length L2 of the flange portion 230 in the length direction of the tube 100 results in weaker connection strength between the tube 100 and the first and second joints 110 and 120 because the tube 100 cannot be moved to a sufficiently deep position in the first and second joints 110 and 120. In the filter unit 10, in the length direction of the tube 100, the length L2 of the flange portion 230 is shorter than the length L1 of the portion of the tubular portion 210 where the tapered portion 220 is formed. Thus, according to the filter unit 10, the connection strength between the first and second joints 110 and 120 and the tube 100 can be kept at a sufficient level because the tube 100 can be moved to a sufficiently deep position in the first and second joints 110 and 120.

The mesh portion 240 is a mesh-shaped member. The mesh portion 240 is affixed to a rear-end-side surface of the flange portion 230. For example, the mesh portion 240 and the flange portion 230 may be adhered to one another using an adhesive, or may be welded together through ultrasonic welding.

With reference to FIG. 2 once again, in the filter unit 10, the caps 200 each including the mesh portion 240 are respectively connected to the openings 101X and 102X of the tube 100. Thus, according to the filter unit 10, the chemical filter CF1 can be kept inside the tube 100 without blocking the path of the compressed air.

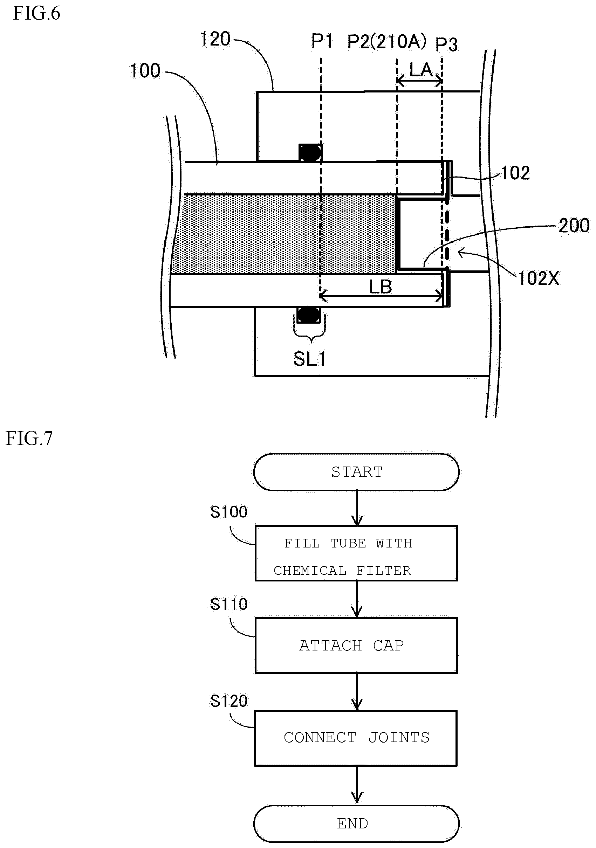

FIG. 6 is a diagram schematically illustrating the vicinity of the second joint 120 in the cross-section taken along line II-II in FIG. 1. Note that, in FIG. 6, the cross-sectional structure of the second joint 120 is omitted with the exception of a seal portion SL1. As illustrated in FIG. 6, the cap 200 is attached to the second end portion 102 in the length direction of the tube 100. The second joint 120 is attached to the tube 100 so as to cover the second end portion 102 and the cap 200. Sealing between the tube 100 and the second joint 120 is established by the seal portion SL1. For example, the seal portion SL1 is formed by a rubber ring.

In the filter unit 10, a length LA from a front end portion P2 (210A) to a rear end portion P3 of the cap 200 is shorter than a length LB from the seal portion SL1 (P1) to the rear end portion P3 of the cap 200. In other words, the front end portion P2 (210A) of the cap 200 does not reach the position of the seal portion SL1.

If the front end portion P2 (210A) of the cap 200 reaches the seal portion SL1, the sealing performance between the second joint 120 and the tube 100 may be affected depending on the material and outer diameter of the cap 200. In the filter unit 10, the length LA from the front end portion P2 (210A) to the rear end portion P3 of the cap 200 is shorter than the length LB from seal portions (e.g., the seal portion SL1) that establish sealing between the tube 100 and the first and second joints 110 and 120 to the rear end portion P3 of the cap 200. According to the filter unit 10, the sealing performance between the tube 100 and the first and second joints 110 and 120 can be kept at a sufficient level because the front end portion P2 (210A) of the cap 200 does not reach the seal portion SL1 establishing sealing between the tube 100 and the first and second joints 110 and 120.

[2. Method for Manufacturing Filter Unit]

FIG. 7 is a flowchart illustrating a procedure for manufacturing the filter unit 10. Each step shown in this flowchart is performed by a worker.

With reference to FIG. 7, the worker attaches the cap 200 to the second end portion 102 of the tube 100, and fills the tube 100 with the chemical filter CF1 (step S100). The worker attaches the cap 200 to the first end portion 101 of the tube 100 (step S110). The worker respectively attaches the first joint 110 and the second joint 120 to the first end portion 101 and the second end portion 102 of the tube 100 having the caps 200 attached to each of the first end portion 101 and the second end portion 102 (step S120). Thus, the manufacturing of the filter unit 10 is complete.

[3. Features]

As described above, in the filter unit 10 according to the present embodiment, the tube 100 is flexible, and the first joint 110 and the second joint 120 are respectively connected to the first end portion 101 and the second end portion 102 of the tube 100. Thus, according to the filter unit 10, the filter unit 10 can be installed relatively easily even if there is a limitation on installation space and the like because the tube 100 can be easily deformed and also because the tube 100 and a device or the like that discharges compressed air can be easily connected to each other.

<Embodiment 2>

A filter unit 10X according to embodiment 2 differs from the filter unit 10 according to embodiment 1 in that the filter unit 10X includes a cap 200X, whereas the rest of the configurations are the same as those in embodiment 1. In the following, the filter unit 10X according to embodiment 2 will be described focusing on portions that differ from embodiment 1.

[4. Schematic Configuration of Filter Unit]

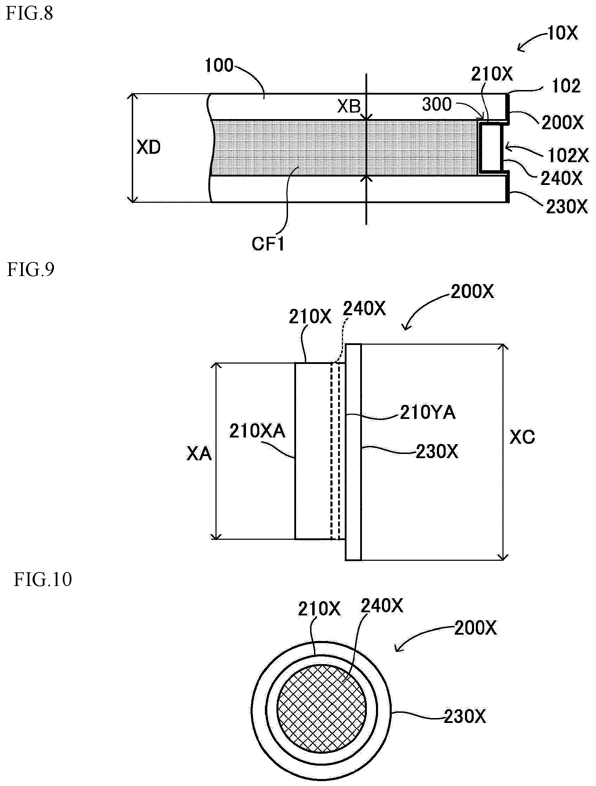

FIG. 8 is a cross-sectional view illustrating the second end portion 102 and the vicinity thereof in the filter unit 10X. FIG. 9 is a lateral view of the cap 200X. FIG. 10 is a front view of the cap 200X. Note that illustration of the second joint 120 is omitted from FIG. 8.

The cap 200X includes a tubular portion 210X, a flange portion 230X, and a mesh portion 240X. The tubular portion 210X has a circular shape in a plan view. A front end portion 210XA of the tubular portion 210X is inserted into openings 101X and 102X (see FIG. 2) respectively provided in the first and second end portions 101 and 102 in the length direction of the tube 100. The tubular portion 210X has a constant outer diameter XA (see FIG. 9) between the front end portion 210XA and a rear end portion 210YA. Thus, the cap 200X can be easily manufactured. The outer diameter XA is smaller than an inner diameter XB (see FIG. 8) of the tube 100. Thus, a clearance 300 is formed between the inner circumferential surface of the tube 100 and a portion of the tubular portion 210X that faces the inner circumferential surface of the tube 100. The clearance 300 is of a size that does not allow the element forming the chemical filter CF1 (e.g., activated charcoal or the like) to flow outside of the tube 100. The cap 200X is held by the first and second joints 110 and 120 because the first joint 110 and the second joint 120 are respectively connected to the first end portion 101 and the second end portion 102 of the tube 100. Thus, the cap 200X does not come loose from the tube 100 when the filter unit 10X is being used.

The flange portion 230X is formed on the rear end portion 210YA of the tubular portion 210X, and extends radially outward of the tubular portion 210X. In a state in which the cap 200X is attached to the tube 100, a front-end-side surface of the flange portion 230X is in contact with rims of the openings 101X and 102X. An outer diameter XC of the flange portion 230X is slightly smaller than an outer diameter XD of the tube 100. In a state in which the cap 200X is attached to the tube 100, the flange portion 230X is positioned inward of the outline of the tube 100. Thus, the cap 200X and the first and second joints 110 and 120 are less likely to interfere with one another when the first and second joints 110 and 120 are connected to the tube 100.

For example, the tubular portion 210X and the flange portion 230X are integrally formed using a resin. For example, the resin is polypropylene or polyester. In order to enhance rigidity, the material forming the tubular portion 210X and the flange portion 230X is preferably a transparent polypropylene. If the material forming the tubular portion 210X and the flange portion 230X is a transparent polypropylene, the state of welding between the tubular portion 210X, the flange portion 230X, and the mesh portion 240X can be easily checked.

The mesh portion 240X is formed between the front end portion 210XA and the rear end portion 210YA of the tubular portion 210X. Thus, the air permeability of the cap 200X is improved. The position of the tubular portion 210X where the mesh portion 240X is to be formed can be selected as desired. In order to house the largest possible amount of the chemical filter CF1, the mesh portion 240X is preferably provided at a position of the tubular portion 210X that is close to the rear end portion 210YA.

The mesh portion 240X is formed integrally with the tubular portion 210X and the flange portion 230X. For example, the cap 200X is manufactured by the tubular portion 210X and the flange portion 230X being injection molded onto the mesh portion 240X inserted into a mold for molding the tubular portion 210X and the flange portion 230X. For example, the cap 200X may be manufactured through cutting or using a forming method involving the use of a 3D printer or the like. For example, the material forming the mesh portion 240X is a resin. In order to suppress outgassing, the material forming the mesh portion 240 is preferably polyester. The mesh portion 240X has a mesh size that does not allow the element forming the chemical filter CF1 (e.g., activated charcoal or the like) to flow outside of the cap 200X.

[5. Features]

As described above, in the filter unit 10X according to the present embodiment, the cap 200X can be easily manufactured because the outer diameter XA of the tubular portion 210X of the cap 200X is constant. Furthermore, in a case in which the particle diameter of the element forming the chemical filter CF1 (e.g., activated charcoal or the like) is large to a certain extent, the activated charcoal or the like is unlikely to flow to the outside even if the clearance 300 is formed between the cap 200X and the tube 100. Thus, the cap 200X, which can be easily manufactured, can be suitably used as in the present embodiment.

[6. Tests]

The present inventor(s) manufactured an example filter unit and carried out first and second tests. The example filter unit was a filter unit according to embodiment 1, and the tube was a pressure-resistant tube. The example filter unit had an outer diameter of 12.7 mm and an inner diameter of 9.56 mm. The first test was a test for checking contamination-gas removal efficiency when the compressed air is pressurized. The second test was a test for checking the filter-unit lifetime when the compressed air is pressurized. Note that, for convenience of description, description is provided in the following with the same reference symbols as those in embodiment 1 given to elements constituting the example filter unit that are the same as those in embodiment 1.

[7. First Test]

In the first test, compressed air discharged from a device that discharges compressed air was pressurized using a compressor, and the concentration of a contamination gas included in upstream-side compressed air and the concentration of the contamination gas included in downstream-side compressed air were measured. The concentration of the contamination gas included in the upstream-side compressed air was the concentration of the contamination gas included in the compressed air discharged from the device. The concentration of the contamination gas included in the downstream-side compressed air was the concentration of the contamination gas included in the compressed air after passing through the filter unit 10. The contamination gas was toluene or total organic carbon (TOC). The pressure of the pressurized compressed air was 0.1 MPa, 0.2 MPa, 0.3 MPa, 0.4 MPa, and 0.5 MPa. The test flow rate was 100 NL/min under atmospheric pressure.

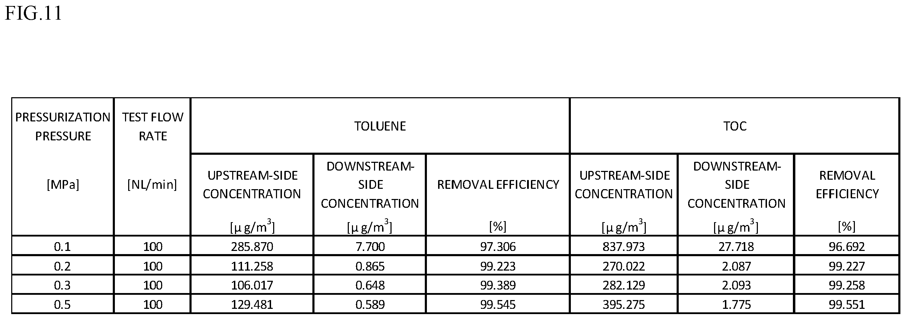

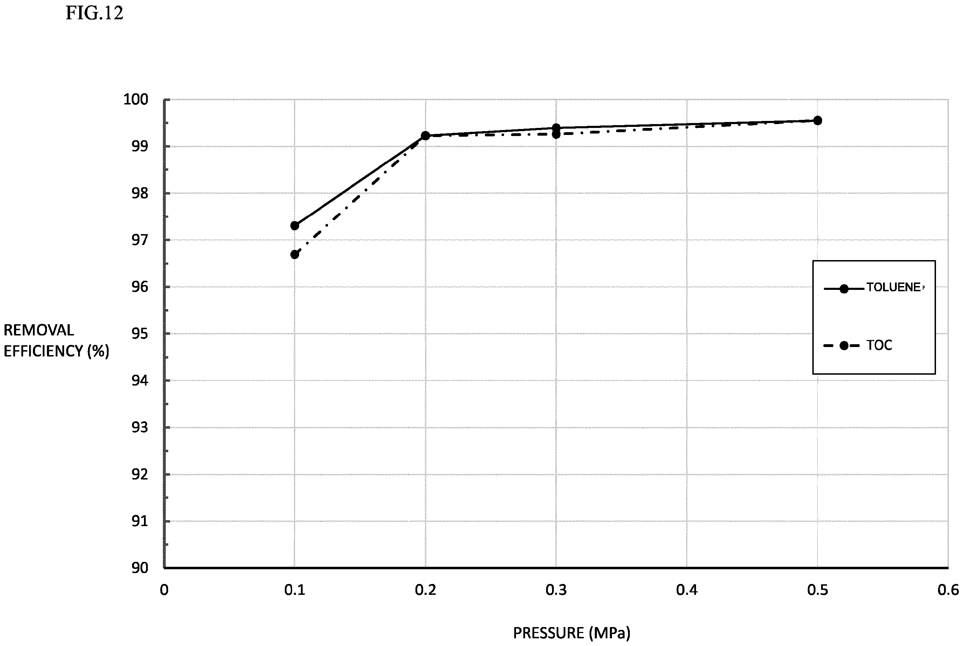

FIG. 11 is a table showing the results of the first test. FIG. 12 is a graph showing the results of the first test. The removal efficiency in FIG. 11 was calculated using Formula (1) below.

$$\text{Removal efficiency (\%)} = 100 - [(\text{downstream-side concentration} \div \text{upstream-side concentration}) \times 100] \dots (1)$$

As shown in FIGS. 11 and 12, it was confirmed that the higher the pressure of the pressurized compressed air, the higher the removal efficiency. Furthermore, it was confirmed that relatively high removal efficiency could be obtained even if the pressure of the compressed air is around 0.1 MPa. One reason why such results where obtained is because the volume of the compressed air decreases when the compressed air is pressurized, and thus the flow rate decreases and the contact time between the element forming the chemical filter CF1 (e.g., activated charcoal) and the compressed air increases. It is conceivable that the contamination gas was thus more readily adsorbed by the activated charcoal or the like.

[8. Second Test]

In the second test, compressed air discharged from a device that discharges compressed air was pressurized using a compressor, and the discharge time of the compressed air, the concentration of a contamination gas included in upstream-side compressed air, and the concentration of the contamination gas included in downstream-side compressed air were measured. The concentration of the contamination gas included in the upstream-side compressed air and the concentration of the contamination gas included in the downstream-side compressed air were the same as those in the first test. The contamination gas was toluene. The pressure of the pressurized compressed air was 0.2 MPa, 0.3 MPa, and 0.5 MPa. The discharge time of the compressed air was two hours (120 min). Similarly to the first test, the test flow rate was 100 NL/min under atmospheric pressure.

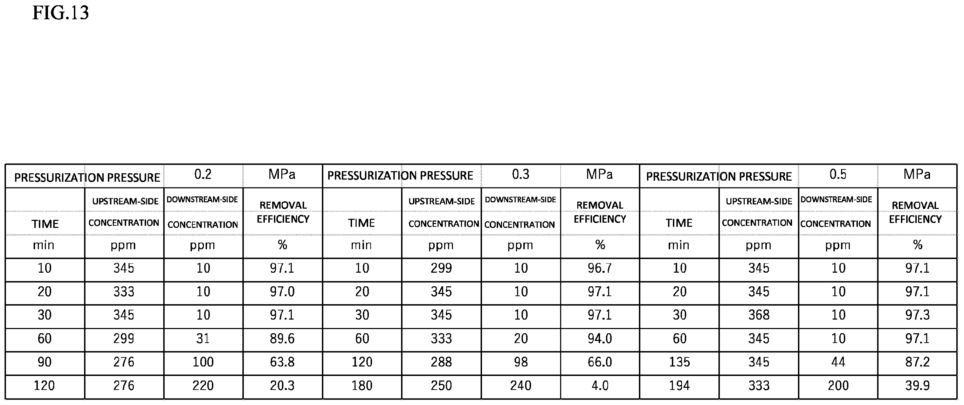

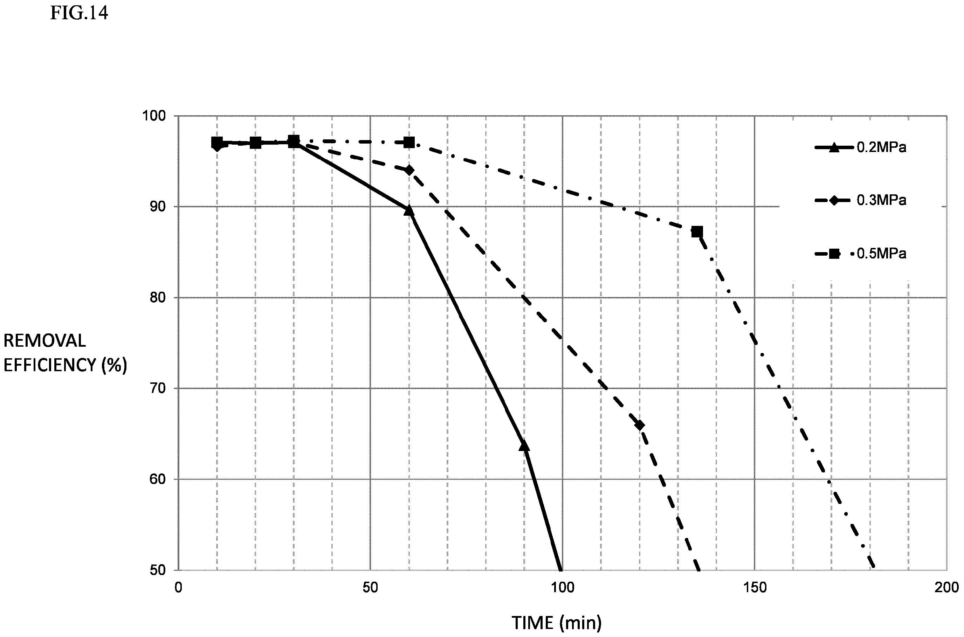

FIG. 13 is a table showing the results of the second test. FIG. 14 is a graph showing the results of the second test. The removal efficiency in FIG. 13 was calculated using Formula (1) described in the description regarding the first test.

As shown in FIGS. 13 and 14, it was confirmed that the higher the pressure of the pressurized compressed air, the more gradual the decrease of the removal efficiency in relation to the discharge time of the compressed air. In other words, it was confirmed that the higher the pressure of the pressurized compressed air, the longer the service life of the filter unit 10. For example, the time it took for the removal efficiency to decrease to 66.7% was 87 min when the pressure of the compressed air was 0.2 MPa, 119 min when the pressure of the compressed air was 0.3 MPa, and 173 min when the pressure of the compressed air was 0.5 MPa.

[9. Modifications]

While embodiments of the present invention have been described above, the present invention is not limited to the above-described embodiments, and various modifications can be made within the scope of the present invention. Modifications of the present invention are described below. Note that these modifications may be combined with one another as long no technical contradiction arises therebetween.

(9-1)

In above-described embodiment 1, the filter unit 10 includes one tube 100. However, the number of tubes 100 included in the filter unit 10 may be two or three. That is, a plurality of tubes 100 may be included in the filter unit 10.

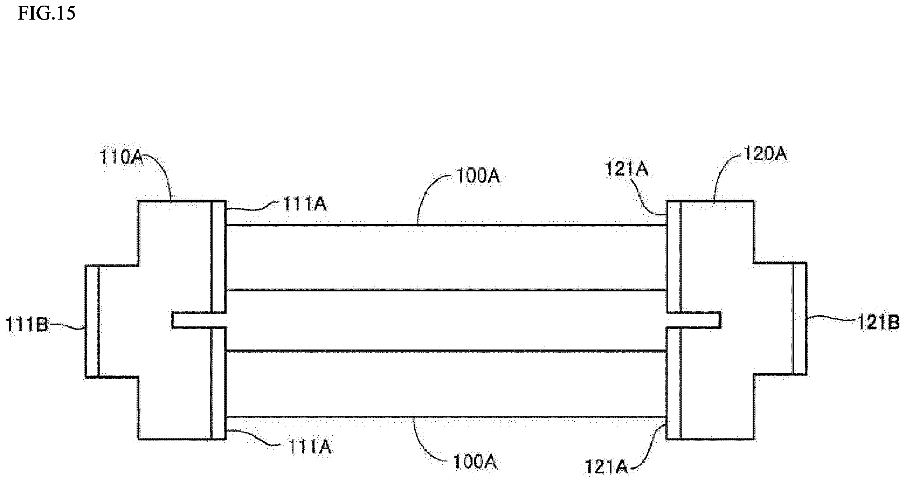

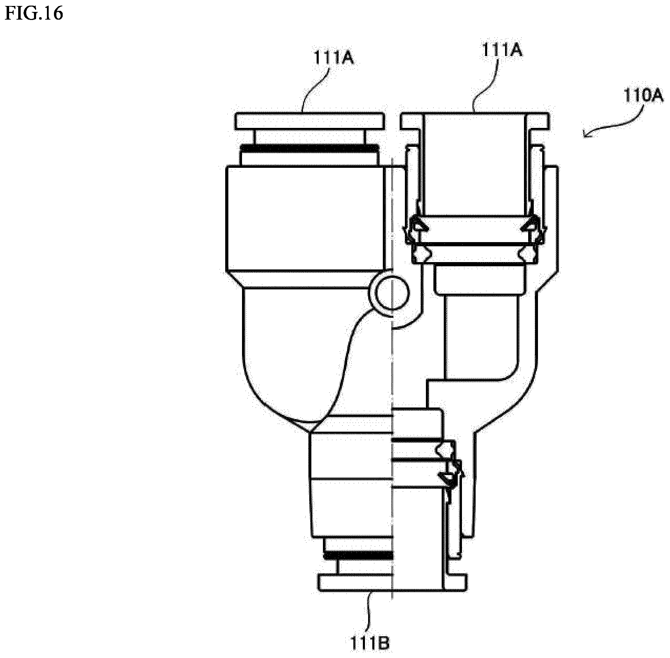

FIG. 15 is a diagram illustrating a schematic configuration of a filter unit 10A in a modification. FIG. 16 is a partial cross-sectional view of a first joint 110A in the filter unit 10A. As illustrated in FIG. 15, the filter unit 10A includes two tubes 100A, a first joint 110A, and a second joint 120A. Similarly to the tube 100 in above-described embodiment 1, the chemical filter CF1 is included in each tube 100A, and the caps 200 are respectively attached to the openings in the two end portions of each tube 100A. The first joint 110A integrates the first end portions 101 of the plurality of tubes 100A. The first joint 110A includes a plurality of tube connection portions 111A that are connected to the first end portions 101 of the tubes 100A, and one device connection portion 111B to which a device that discharges compressed air is directly or indirectly connected. The second joint 120A integrates the second end portions 102 of the plurality of tubes 100A. The second joint 120A has the same structure as the first joint 110A. The second joint 120A includes a plurality of tube connection portions 121A and one device connection portion 121B.

In the filter unit 10A, the chemical filter CF1 is distributed between the plurality of tubes 100A. Thus, if the amount of the chemical filter CF1 is the same, the tubes 100A can be made narrower compared to when there is only one tube 100. Consequently, according to the filter unit 10A, the filter unit 10A can be made more readily bendable and smaller.

(9-2)

Furthermore, the shape of the cap 200 in above-described embodiment 1 is not limited to the shape illustrated in FIGS. 3, 4, and 5. For example, the tapered portion 220 does not necessarily have to be provided on the cap 200. Alternatively, the tapered portion 220 may be formed over the entire tubular portion 210 from the front end portion 210A to the rear end portion 210B, or may be formed only near the rear end portion 210B, for example.

(9-3)

Furthermore, in above-described embodiment 1, the first and second joints 110 and 120 are so-called quick joints. However, the first and second joints 110 and 120 do not necessarily have to be quick joints. For example, the first and second joints 110 and 120 may each be any kind of joint as long as pipes can be connected thereto from two directions.

(9-4)

Furthermore, in above-described embodiment 2, the mesh portion 240X is formed between the front end portion 210XA and the rear end portion 210YA of the tubular portion 210X. However, the position of the cap 200X where the mesh portion 240 is formed may be changed as appropriate. For example, the mesh portion 240 may be formed in the flange portion 230X, or may be formed so as to span between the flange portion 230X and the tubular portion 210X.

List of Reference Numerals

| | |
|---|---|
| 10 | Filter unit |
| 100 | Tube |
| 101 | First end portion |
| 101X | Opening |
| 102 | Second end portion |
| 102X | Opening |
| 110 | First joint |
| 120 | Second joint |
| 200 | Cap |
| 210 | Tubular portion |
| 210A | Front end portion |
| 210XA | Front end portion |
| 210B | Rear end portion |
| 210YA | Rear end portion |
| 220 | Tapered portion |
| 230 | Flange portion |
| 240 | Mesh portion |
| CF1 | Chemical filter |
| SL1 | Seal portion |

**Claims**

1. A filter unit comprising:

   a tube that includes a first end portion and a second end portion and that is flexible;
   a chemical filter that is housed inside the tube;
   a first joint that is connected to the first end portion of the tube; and
   a second joint that is connected to the second end portion of the tube,
   wherein the first joint is configured to be directly or indirectly connected to a device that discharges compressed air.

2. The filter unit according to claim 1, wherein the first and second joints are quick joints.

3. The filter unit according to claim 1 or 2,

   wherein the first and second end portions are respectively provided with openings,
   the filter unit further comprises caps that are respectively attached to the openings, and
   the cap includes:

a tubular portion having a front end portion thereof inserted into the opening;

a flange portion that is formed on a rear end portion of the tubular portion and that is in contact with a rim of the opening; and

a mesh portion that is attached to the flange portion and that covers the opening.

4. The filter unit according to claim 3,
wherein the tubular portion is provided with a tapered portion that expands radially outward of the tubular portion commensurately as a distance to the rear end portion decreases.

5. The filter unit according to claim 3 or 4,
wherein a length from the front end portion to the rear end portion is shorter than a length to the rear end portion from a seal portion that establishes sealing between the first joint and the tube.

6. The filter unit according to claim 4,
wherein, in a length direction of the tube, a length of the flange portion is shorter than a length of a portion of the tubular portion where the tapered portion is formed.

7. The filter unit according to any of claims 1 to 6, wherein the tube is a pressure-resistant tube.

8. The filter unit according to claim 2,

wherein the first and second end portions are respectively provided with openings,
the filter unit further comprises caps that are respectively attached to the openings,
the cap includes:

a tubular portion having a front end portion thereof inserted into the opening; and
a flange portion that is formed on a rear end portion of the tubular portion and that is in contact with a rim of the opening, and

the tubular portion has a constant outer diameter between the front end portion and the rear end portion.

9. The filter unit according to claim 8,
wherein the cap includes a mesh portion that is formed integrally with at least one of the tubular portion and the flange portion so as to cover the opening.

10. A filter unit comprising:

a plurality of tubes each of which includes a first end portion and a second end portion, and is flexible;
a chemical filter that is housed inside each of the plurality of tubes;
a first joint that integrates the first end portions of the plurality of tubes; and
a second joint that integrates the second end portions of the plurality of tubes,
wherein the first joint is configured to be directly or indirectly connected to a device that discharges compressed air.

FIG.1

FIG.2

FIG.3

FIG.4

FIG.5

FRONT-END SIDE ⟷ REAR-END SIDE

FIG.6

FIG.7

FIG.8

FIG.9

FIG.10

FIG.11

| PRESSURIZATION PRESSURE | TEST FLOW RATE | TOLUENE | | | TOC | | |
|---|---|---|---|---|---|---|---|
| [MPa] | [NL/min] | UPSTREAM-SIDE CONCENTRATION [μg/m³] | DOWNSTREAM-SIDE CONCENTRATION [μg/m³] | REMOVAL EFFICIENCY [%] | UPSTREAM-SIDE CONCENTRATION [μg/m³] | DOWNSTREAM-SIDE CONCENTRATION [μg/m³] | REMOVAL EFFICIENCY [%] |
| 0.1 | 100 | 285.870 | 7.700 | 97.306 | 837.973 | 27.718 | 96.692 |
| 0.2 | 100 | 111.258 | 0.865 | 99.223 | 270.022 | 2.087 | 99.227 |
| 0.3 | 100 | 106.017 | 0.648 | 99.389 | 282.129 | 2.093 | 99.258 |
| 0.5 | 100 | 129.481 | 0.589 | 99.545 | 395.275 | 1.775 | 99.551 |

FIG.12

EP 4 230 281 A1

FIG.13

| PRESSURIZATION PRESSURE | | 0.2 | MPa | PRESSURIZATION PRESSURE | | 0.3 | MPa | PRESSURIZATION PRESSURE | | 0.5 | MPa |
|---|---|---|---|---|---|---|---|---|---|---|---|
| TIME | UPSTREAM-SIDE CONCENTRATION | DOWNSTREAM-SIDE CONCENTRATION | REMOVAL EFFICIENCY | TIME | UPSTREAM-SIDE CONCENTRATION | DOWNSTREAM-SIDE CONCENTRATION | REMOVAL EFFICIENCY | TIME | UPSTREAM-SIDE CONCENTRATION | DOWNSTREAM-SIDE CONCENTRATION | REMOVAL EFFICIENCY |
| min | ppm | ppm | % | min | ppm | ppm | % | min | ppm | ppm | % |
| 10 | 345 | 10 | 97.1 | 10 | 299 | 10 | 96.7 | 10 | 345 | 10 | 97.1 |
| 20 | 333 | 10 | 97.0 | 20 | 345 | 10 | 97.1 | 20 | 345 | 10 | 97.1 |
| 30 | 345 | 10 | 97.1 | 30 | 345 | 10 | 97.1 | 30 | 368 | 10 | 97.3 |
| 60 | 299 | 31 | 89.6 | 60 | 333 | 20 | 94.0 | 60 | 345 | 10 | 97.1 |
| 90 | 276 | 100 | 63.8 | 120 | 288 | 98 | 66.0 | 135 | 345 | 44 | 87.2 |
| 120 | 276 | 220 | 20.3 | 180 | 250 | 240 | 4.0 | 194 | 333 | 200 | 39.9 |

FIG.14

FIG.15

EP 4 230 281 A1

FIG.16

EP 4 230 281 A1

## INTERNATIONAL SEARCH REPORT

| International application No. |
|---|
| **PCT/JP2021/038386** |

**A. CLASSIFICATION OF SUBJECT MATTER**

*B01D 53/04*(2006.01)i; *F16L 55/24*(2006.01)i
FI: B01D53/04 110; F16L55/24 A

According to International Patent Classification (IPC) or to both national classification and IPC

**B. FIELDS SEARCHED**

Minimum documentation searched (classification system followed by classification symbols)

B01D53/04; F16L55/24

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2005/0199126 A1 (ARNO, Michael J.) 15 September 2005 (2005-09-15) paragraphs [0019]-[0028], fig. 1-5 | 1, 7 |
| Y | paragraphs [0019]-[0031], fig. 1-5 | 2-3, 7-9 |
| A | paragraphs [0019]-[0031], fig. 1-5 | 4-6, 10 |
| Y | JP 2007-120671 A (NGK SPARK PLUG CO LTD) 17 May 2007 (2007-05-17) paragraph [0004] | 2-3, 7-9 |
| Y | JP 9-196269 A (SMC CORP) 29 July 1997 (1997-07-29) paragraph [0002] | 2-3, 7-9 |
| Y | Microfilm of the specification and drawings annexed to the request of Japanese Utility Model Application No. 164837/1976 (Laid-open No. 81645/1978) (FIRE-DEFENCE AGANCY HAYASHI, Shinya) 06 July 1978 (1978-07-06), p. 1, line 9 to p. 2, line 2, p. 3, lines 5-9 | 2-3, 7-9 |
| Y | Microfilm of the specification and drawings annexed to the request of Japanese Utility Model Application No. 110861/1990 (Laid-open No. 74590/1992) (TANAKA, Hajime) 30 June 1992 (1992-06-30), claim 1, p. 3, lines 8-13, fig. 2 | 3, 7 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2021/038386** |

**C.    DOCUMENTS CONSIDERED TO BE RELEVANT**

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 028723/1975 (Laid-open No. 93837/1976) (HITACHI CHEMICAL COMPANY, LTD) 28 July 1976 (1976-07-28), claim 1, p. 3, lines 7-10, fig. 2 | 8-9 |
| Y | JP 2002-210456 A (NGK INSULATORS LTD) 30 July 2002 (2002-07-30)<br>    paragraphs [0013]-[0014], fig. 1 | 8-9 |
| Y | JP 10-296054 A (KOA CORP:KK) 10 November 1998 (1998-11-10)<br>    claim 1, fig. 1 | 8-9 |
| A | JP 10-52615 A (TAKENAKA KOMUTEN CO LTD) 24 February 1998 (1998-02-24)<br>    claim 1, fig. 1 | 1-10 |
| A | JP 2019-51519 A (TOSHIBA ENERGY SYSTEM & SOLUTION CORP) 04 April 2019 (2019-04-04)<br>    paragraphs [0033]-[0038], fig. 2 | 1-10 |
| A | JP 2012-75994 A (TOEI SANGYO KK) 19 April 2012 (2012-04-19)<br>    claim 1, paragraph [0017], fig. 1 | 1-10 |

Form PCT/ISA/210 (second sheet) (January 2015)

24

## INTERNATIONAL SEARCH REPORT
### Information on patent family members

International application No.

**PCT/JP2021/038386**

| Patent document cited in search report | | | Publication date (day/month/year) | Patent family member(s) | | | Publication date (day/month/year) |
|---|---|---|---|---|---|---|---|
| US | 2005/0199126 | A1 | 15 September 2005 | US | 2005/0199403 | A1 | |
| | | | | US | 2005/0201893 | A1 | |
| | | | | WO | 2005/089221 | A2 | |
| | | | | WO | 2005/089222 | A2 | |
| | | | | WO | 2005/089223 | A2 | |
| JP | 2007-120671 | A | 17 May 2007 | (Family: none) | | | |
| JP | 9-196269 | A | 29 July 1997 | US | 5762380 | A | |
| | | | | column 1, lines 9-17 | | | |
| | | | | EP | 785386 | A1 | |
| JP | 53-81645 | U1 | 06 July 1978 | (Family: none) | | | |
| JP | 4-74590 | U1 | 30 June 1992 | (Family: none) | | | |
| JP | 51-93837 | U1 | 28 July 1976 | (Family: none) | | | |
| JP | 2002-210456 | A | 30 July 2002 | (Family: none) | | | |
| JP | 10-296054 | A | 10 November 1998 | (Family: none) | | | |
| JP | 10-52615 | A | 24 February 1998 | (Family: none) | | | |
| JP | 2019-51519 | A | 04 April 2019 | (Family: none) | | | |
| JP | 2012-75994 | A | 19 April 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006263545 A